# EUROPEAN PATENT SPECIFICATION

(11) **EP 4 239 609 B1**
(45) Date of publication and mention of the grant of the patent: **11.02.2026**
(21) Application number: 20959865.5
(22) Date of filing: 30.10.2020
(51) Int. Cl.: G08B 17/06

(54) **DISASTER PREVENTION DEVICE**
KATASTROPHENVERHINDERUNGSVORRICHTUNG
DISPOSITIF DE PRÉVENTION DE CATASTROPHE

(43) Date of publication of application: 06.09.2023
(73) Proprietor: Hochiki Corporation, Shinagawa-ku, Tokyo 141-8660 (JP)
(72) Inventor: WASHIZU, Keisuke, Tokyo 141-8660 (JP); DOHI, Manabu, Tokyo 141-8660 (JP)
(74) Representative: Laine IP Oy
(86) International application number: PCT/JP2020/040838
(87) International publication number: WO 2022/091347

(56) References cited:
- WO-A1-2020/075487
- JP-A- 2003 109 142
- JP-A- 2019 016 183
- JP-A- 2019 149 063
- JP-A- 2020 061 122
- JP-A- H08 287 374
- JP-A- H08 305 978
- KR-Y1- 200 355 561
- KR-Y1- 200 355 561
- US-A1- 2003 058 116
- US-A1- 2017 270 759

## Description

### Technical Field

The present invention relates to a disaster prevention apparatus.

### Background Art

In the related art, a detector that is installed on a ceiling, etc. to detect heat caused by fire has been known (for example, refer to Patent Literature 1). The detector detects heat by measuring a temperature with a thermistor accommodated in a protector. A disaster prevention apparatus is further known (for example, refer to Patent Literature 2). The disaster prevention apparatus comprises an outer cover, a detection element in the form of a heat-sensing element, and a detection element protector that accommodates the detection element.

### Citation List

### Patent Literature

Patent Literature 1: Laid-Open Patent Publication in Japan No. 2012-198757
Patent Literature 2: Laid-Open Patent Publication WO 2020/075487 A1

### Summary of Invention

### Technical Problem

By the way, for example, in the detector that detects heat, including the detector of Patent Literature 1, generally, there is a demand for improving an inflow characteristic of a hot air current to the thermistor accommodated in the protector.

However, widening an opening portion of the protector is required to meet the demand, but when the opening portion is widened too much, there is a possibility that a user's finger enters the detector through the opening portion during installation, and damages the thermistor.

The invention is conceived in view of the foregoing problem, and an object of the invention is to provide a disaster prevention apparatus capable of preventing a contact object from coming into contact with a detection element while improving an inflow characteristic of a detection target with respect to the detection element. The invention is defined by the features of independent claim 1. Preferred embodiments are presented in the dependent claims.

### Solution to Problem

In order to solve the above-described problems and archive the purposes, a disaster prevention apparatus of claim 1 is a disaster prevention apparatus comprising: an outer cover; a detection element that detects a physical quantity of a detection target and that is provided at a center of the outer cover in a direction parallel to an attachment surface of an attachment object to which the disaster prevention apparatus is to be attached, and a detection element protector that accommodates the detection element, that is provided on the outer cover, and that has an opening portion through which the detection target flows in and out with respect to the detection element, the detection element protector including a circular member, and support members located between the circular member and the outer cover and supporting the circular member, wherein the opening portion is partitioned off by the support members, wherein the disaster prevention apparatus further comprises a preventor that allows inflow of the detection target to a detection element side through the opening portion and prevents a contact object from entering and coming into contact with the detection element through the opening portion, and that is provided in the opening portion, wherein the preventor is a projection that protrudes from the outer cover, wherein outer surfaces of the preventor are curved so that a height increases from an outer side toward an inner side of the disaster prevention apparatus in the direction parallel to the attachment surface of the attachment object.

The disaster prevention apparatus may be provided at a position close to a center of an edge portion of the opening portion.

A plurality of opening portions may be provided, and at least one preventor is provided for each opening portion of the plurality of opening portions.

The disaster prevention apparatus may be at least a heat detector.

### Advantageous Effects of the Invention

According to the disaster prevention apparatus of claim 1, since the preventor is provided in the opening portions and the preventor is a projection, for example, even when the size of the opening portions is set to be relatively large, the projection comes into contact with a finger trying to enter the detection element side through the opening portion, so that it is possible to prevent contact of the contact object with the detection element, while improving an inflow characteristic of a detection target with respect to the detection element. In addition, electrostatic breakdown caused by the approach of the contact object to internal components such as the detection element can be prevented.

According to the disaster prevention apparatus of claim 1, since the preventor protrudes from the outer cover side, for example, strength of peripheries of the preventor can be improved, so that the peripheries of the preventor can be prevented from being damaged when the contact object comes into contact with the preventor.

According to the disaster prevention apparatus of claim 2, since the preventor is provided at positions close to the centers of the edge portions of the opening portions, for example, a contact object can be reliably prevented from entering the detection element side, so that the contact object can be reliably prevented from coming into contact with the detection element. In addition, for example, electrostatic breakdown caused by the approach of the contact object to internal components such as the detection element can be prevented.

According to the disaster prevention apparatus of claim 1, since the outer surfaces of the preventor are curved, for example, when a contact object comes into contact with the preventor, a user with a finger that is the contact object can be prevented from feeling pain. In addition, for example, since a detection target can flow in along the outer surfaces of the preventor, an inflow characteristic of the detection target can be improved. In addition, for example, since a unified impression can be provided to the entirety of the disaster prevention apparatus the design of the disaster prevention apparatus can be improved.

According to the disaster prevention apparatus of claim 3, since at least one preventor is provided for a plurality of the opening portions, for example, a contact object can be reliably prevented from entering the detection element side, so that the contact object can be reliably prevented from coming into contact with the detection element. In addition, for example, electrostatic breakdown caused by the approach of the contact object to internal components such as the detection element can be prevented.

According to the disaster prevention apparatus of claim 4, since the disaster prevention apparatus is at least a heat detector, for example, it is possible to prevent contact of the contact object with the detection element, while improving an inflow characteristic of a detection target with respect to the detection element, and it is possible to provide a heat detector wherein electrostatic breakdown caused by the approach of the contact object to internal components such as the detection element can be prevented.

### Brief Description of Drawings

[FIG. 1] FIG. 1 is a perspective view of a detector according to an embodiment.
[FIG. 2] FIG. 2 is a plan view of the detector.
[FIG. 3] FIG. 3 is a side view of the detector.
[FIG. 4] FIG. 4 is a cross-sectional view taken along line A-A of FIG. 2.
[FIG. 5] FIG. 5 is an enlarged view of a part of FIG. 3.
[FIG. 6] FIG. 6 is a view showing an optical path in FIG. 4 as an example.

### Description of Embodiments

Hereinafter, an embodiment of a disaster prevention apparatus according to the invention will be described in detail with reference to the drawings. Incidentally, the invention is not limited by the embodiment.

### [Basic concept of embodiment]

First, the basic concept of the embodiment will be described. The embodiment generally relate to the disaster prevention apparatus.

The "disaster prevention apparatus" is an apparatus used for prevention of a disaster, for example, is a concept including an apparatus that detects an abnormality of a monitoring region, etc., and as one example, is a concept including a heat detector, a fire detector, a gas detector, a smoke detector, etc. In addition, the "disaster prevention apparatus" includes, for example, an outer cover, a detection element, a detection element protector, and a preventor.

The "monitoring region" is a region to be monitored by the disaster prevention apparatus, specifically, is a certain extent of space and, for example, is a concept including a room (for example, a first-floor room A, a first-floor room B, etc.), a corridor, and a stair of a building, etc. In addition, the "abnormality of the monitoring region" indicates that the state of the monitoring region is different from a normal state and, specifically, is a concept including a fire outbreak, a gas leakage, etc.

The "outer cover" covers, for example, at least some of components of the disaster prevention apparatus.

The "detection element" is, for example, a component that detects a physical quantity of the detection target and as one example, is a concept including a temperature sensor such as a thermistor, a smoke sensor formed of a light emitting diode, a photodiode, etc., a gas sensor, etc. The "physical quantity of the detection target" is, for example, a quantity that can be generated or changed due to an abnormality of the monitoring region, and as one example, is a concept including temperature caused by heat, smoke concentration, the concentration of gas such as carbon monoxide gas, etc. Here, the "detection target" is, for example, a concept including a hot air current when the physical quantity to be detected is heat (temperature), an air current containing smoke particles when the physical quantity to be detected is smoke concentration, an air current containing carbon monoxide gas when the physical quantity to be detected is gas concentration, for example, carbon monoxide concentration, etc.

The "detection element protector" accommodates the detection element, specifically, is provided on the outer cover, and is a concept including a detection element protector having an opening portion configured such that the detection target flows in and out toward the detection element through the opening portion, etc. Specifically, the "detection element protector" is a concept including, for example, a thermistor guard that protects a thermistor while allowing a hot air current to flow in from the outside toward the thermistor as the detection element provided in a heat detector, and to flow out from a thermistor side to the outside, for example, a smoke sensor guard portion or a smoke sensor accommodation cover portion that protects a smoke detection unit while allowing an air current containing smoke particles to flow in from the outside to the smoke detection unit as a smoke sensor provided in a smoke detector, through a smoke inlet and outlet port that is an opening, and to flow out from the smoke detection unit to the outside, etc.

The "preventor" is a preventor that prevents the contact object from coming into contact with the detection element, and that is provided in the opening portion of the detection element protector, and specifically, is a projection. In addition, for example, the "preventor" is a concept including a preventor protruding from an outer cover side, etc., is a concept including a preventor provided at a position close to a center of an edge portion of the opening portion, etc., is a concept including a configuration in which an outer surface of the preventor is curved, etc., and a concept including a configuration in which at least one preventor is provided for a plurality of the opening portions, etc.

Incidentally, the "contact object" is an object that is prevented from coming into contact with the detection element by the preventor, and is a concept including, for example, a user's finger, etc.

In addition, in the following embodiment, the case where the "disaster prevention apparatus" is a heat detector will be described.

### [Specific contents of embodiment]

Next, specific contents of the embodiment will be described.

### (Configuration - detector)

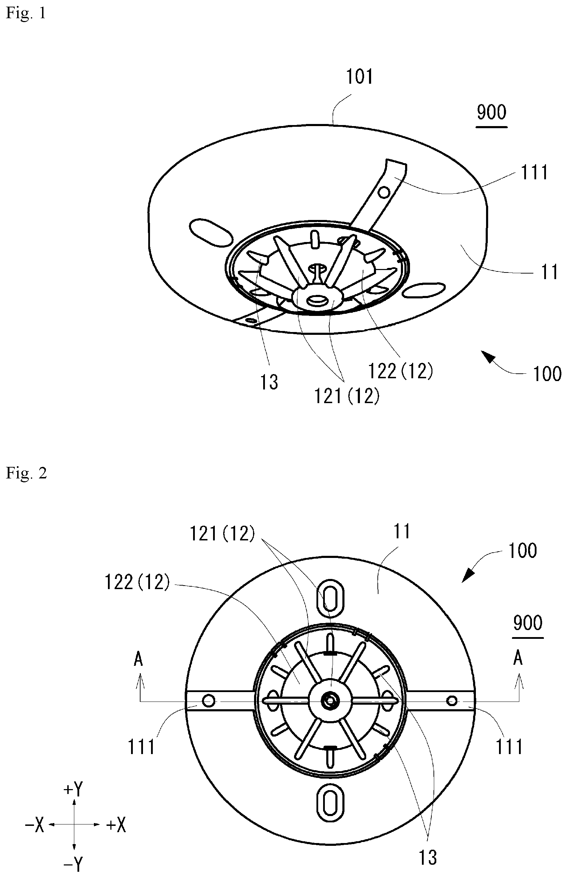

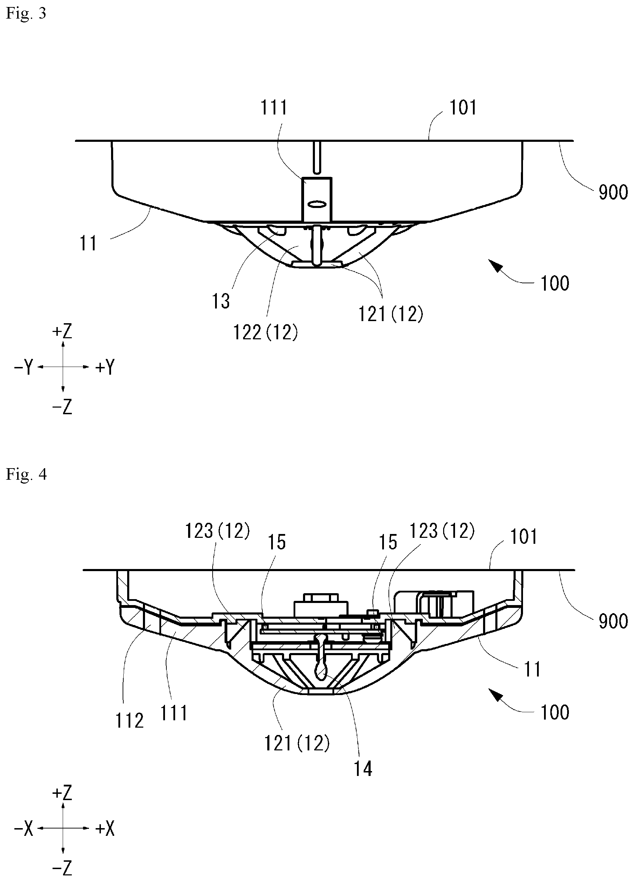

First, a configuration of a detector of the present embodiment will be described. FIG. 1 is a perspective view of the detector according to the embodiment of the invention, FIG. 2 is a plan view of the detector, FIG. 3 is a side view of the detector, and FIG. 4 is a cross-sectional view taken along line A-A of FIG. 2. Incidentally, in each drawing, a Z axis, and an X axis and a Y axis orthogonal to the Z axis will be described as indicating a vertical direction and a horizontal direction, respectively. A detector 1 of each drawing is a disaster prevention apparatus, specifically, is a heat detector that detects heat, is attached to an attachment object 900 such as a ceiling, through an attachment portion 101 (detailed structure is not shown) of the detector 100 of FIG. 3, and as one example, includes an outer cover 11, a protective portion 12, and prevention portions 13 of FIG. 1, and a thermistor 14 and a light emitter 15 of FIG. 4.

### (Configuration - detector - outer cover)

The outer cover 11 of FIG. 1 covers at least some of components of the detector 100. A specific type or configuration of the outer cover 11 is any type or any configuration, however, for example, as shown in FIG. 3, the outer cover 11 includes a cylindrical portion of which the diameter is the same even when extending away from the attachment portion 101, and a tapered portion that is reduced in diameter as extending away from the attachment portion 101, has a light-shielding property except for a specified portion, and includes light guide portions 111 of FIG. 2. Incidentally, the "light-shielding property" is the ability to block light and, for example, is a concept indicating the ability of the outer cover 11 to prevent light from passing from the inside to the outside.

The light guide portions 111 are light guides that guide light. A specific type or configuration of the light guide portions 111 is any type or any configuration, however, for example, the light guide portions 111 is formed in a part of the outer cover 11, are made of any material so as to function as light guides that guide and emit light, are formed separately from portions of the outer cover 11 having a light-shielding property, and allow light to pass through the outer cover 11 from the inside to the outside. In addition, the light guide portions 111 extend, for example, from a front portion side (-Z direction) of the outer cover 11 to a side portion side (+X direction or -X direction) of the outer cover 11, two light guide portions 111 are provided, and as shown in FIG. 2, the light guide portions 111 have a linear shape.

### (Configuration - detector - protective portion)

The protective portion 12 of FIG. 1 is the aforementioned detection element protection. A specific type or configuration of the protective portion 12 is any type or any configuration, however, for example, the protective portion 12 is formed in a part of the outer cover 11, is made of any material so as to function as a light guide that guides and emits light, is formed separately from the portions of the outer cover 11 having a light-shielding property, and allows light to pass through the outer cover 11 from the inside to the outside. In addition, the protective portion 12 is, for example, a so-called thermistor guard that protects the thermistor 14 of FIG. 4, has a hollow portion for accommodating the thermistor 14, protrudes from the outer cover 11 toward a side opposite the attachment portion 101 (-Z direction), is provided at a center of the outer cover 11 in a direction in which the outer cover 11 is widened (direction parallel to an X-Y plane), and is integrally formed with the light guide portions 111. In addition, the protective portion 12 includes, for example, a frame portion 121 and opening portions 122 of FIG. 1, and a spectroscopic portion 123 of FIG. 4.

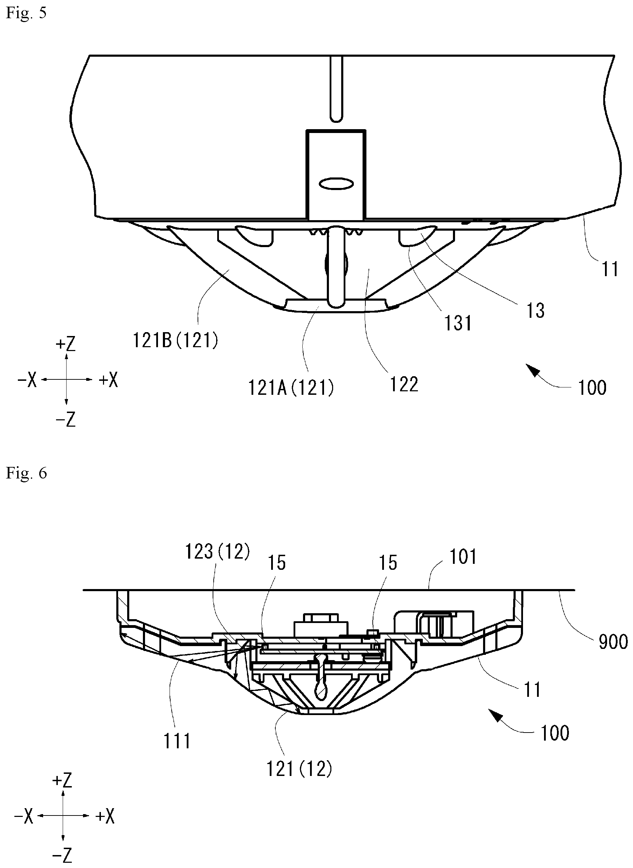

FIG. 5 is an enlarged view of a part of FIG. 3. The frame portion 121 shown in FIG. 5 is, for example, a portion forming an outer shape of at least a part of the protective portion 12, and is a portion including one circular member 121A forming a tip portion (-Z direction) of the detector 100, and six support members 121B between the circular member 121A and the outer cover 11, the support members 121B supporting the circular member 121A.

The opening portions 122 are portions through which a hot air current flows in and out with respect to the thermistor 14 of FIG. 4 provided in the hollow portion of the protective portion 12, and six opening portions 122 are provided in such a manner to be partitioned off by the aforementioned six support members 121B of FIG. 5 of the frame portion 121.

The spectroscopic portion 123 of FIG. 4 is, for example, a portion that refracts, disperses, or reflects light output from the light emitter 15, and is a portion facing the light emitter 15.

### (Configuration - detector - prevention portion)

The prevention portions 13 of FIG. 1 are the preventors that prevent a user's finger, which is the contact object, from coming into contact with the thermistor 14 accommodated in the protective portion 12. The configuration of the prevention portions 13 is a configuration, where projections provided in the opening portions 122, as shown in FIG. 5, protrude from an outer cover 11 side, are provided at positions close to centers of edge portions of the opening portions 122, and as shown in FIG.2, six prevention portions 13, one for each of the opening portions 122, are provided. In addition, outer surfaces 131 of the prevention portions 13 of FIG. 5 are curved, and specifically, are curved to approach a circular member 121A side (-Z direction) (namely, the distance from the outer cover 11 increases) in a height direction (Z-axis direction) from an outer side toward an inner side of the detector 1 in the direction in which the outer cover 11 is widened (direction parallel to the X-Y plane).

Incidentally, the sizes of the prevention portions 13 and the opening portions 122 are any sizes, but are determined, for example, so as to prevent a user's finger from entering the hollow portion through the opening portion 122 and coming into contact with the thermistor 14, while considering an inflow and an outflow of a hot air current with respect to the thermistor 14 side in the hollow portion of the protective portion 12. Incidentally, in this case, regarding the size of the user's finger, a size determined in advance may be assumed, or a size of a predetermined test finger may be assumed.

### (Configuration - detector - thermistor)

The thermistor 14 of FIG. 4 is the aforementioned detection element. A specific type or configuration of the thermistor 14 is any type or any configuration, however, the thermistor 14 detects, for example, a temperature caused by heat or a hot air current, protrudes in a direction orthogonal to the direction in which the outer cover 11 is widened (Z-axis direction), and is accommodated in the protective portion 12.

### (Configuration - detector - light emitter)

The light emitter 15 of FIG. 4 is the aforementioned light emitter. A specific type or configuration of the light emitter 15 is any type or any configuration, however, for example, the light emitter 15 causes the light guide portions 111 and the protective portion 12 to emit light, outputs light toward the spectroscopic portion 123, and can be formed of a light emitting diode, etc.

### (Prevention of contact)

Next, the prevention of contact of a user's finger with the thermistor 14 of the detector 100 configured in such a manner will be described. It is assumed that a user performs work while holding the detector 100 with the hand at any timing such as when the detector 100 is installed, however, in this case, when a user's finger enters the hollow portion of the protective portion 12 through the opening portion 122 of FIG. 5, the user's finger comes into contact with the prevention portion 13 provided in the opening portion 122, so that the user's finger is stopped by the prevention portion 13 and the user's finger is prevented from coming into contact with the thermistor 14. Therefore, damage to the thermistor 14 caused by contact can be prevented. In addition, electrostatic breakdown caused by the approach of the user's finger to the thermistor can be prevented.

### (Emission of light)

Next, the emission of light by the detector 100 configured in such a manner will be described. Incidentally, the detector 100 emits light at any timing, and for example, any timing such as when a state of the detector 100 is notified or when the detector 100 determines a fire outbreak based on a temperature of heat detected by the thermistor 14 is assumed. Incidentally, since the same process as in the related art is applicable to a process in which the detector 100 determines a fire outbreak, the description thereof will not be repeated. FIG. 6 is a view showing an optical path in FIG. 4 as an example.

A control unit (not shown) of the detector 100 of FIG. 6 causes the light emitter 15 to output light. In this case, the light from the light emitter 15 is refracted, dispersed, or reflected by the spectroscopic portion 123, and as shown in FIG. 6, is guided to the entireties of the light guide portions 111 and the protective portion 12. Incidentally, in FIG. 5, for convenience of description, only an optical path of light from the light emitter 15 on the left side of the drawing sheet is shown, but in reality, light is also output from the light emitter 15 on the right side of the drawing sheet, and is guided to the entireties of the light guide portions 111 and the protective portion 12. Then, the entireties of the light guide portions 111 and the protective portion 12 of FIG. 1 emit the light. Since the light is emitted in such a manner, the light emitted from the detector 100 can be viewed from any position in a room in which the detector 100 is installed.

### (Effects of embodiment)

In such a manner, according to the present embodiment, since the prevention portions 13 provided in the opening portions 122 are provided and the prevention portions 13 are projections, for example, even when the size of the opening portions 122 is set to be relatively large, the projection comes into contact with a finger trying to enter the thermistor 14 side through the opening portion 122, so that it is possible to prevent the user's finger that is a contact object from coming into contact with the thermistor 14 while improving an inflow characteristic of a hot air current that is a detection target, with respect to the thermistor 14. In addition, electrostatic breakdown caused by the approach of the user's finger to the thermistor 14 can be prevented.

In addition, since the prevention portions 13 protrude from the outer cover 11 side, for example, strength of peripheries of the prevention portions 13 can be improved, so that the peripheries of the prevention portions 13 can be prevented from being damaged when a contact object comes into contact with the prevention portions 13.

In addition, since the prevention portions 13 are provided at positions close to the centers of the edge portions of the opening portions 122, for example, a contact object can be reliably prevented from entering the thermistor 14 side, so that the contact object can be reliably prevented from coming into contact with the thermistor 14. In addition, for example, electrostatic breakdown caused by the approach of a user's finger to the thermistor 14 can be prevented.

In addition, since the outer surfaces 131 of the prevention portions 13 are curved, for example, when a contact object comes into contact with the prevention portion 13, a user with a finger that is the contact object can be prevented from feeling pain. In addition, for example, since a detection target can flow in along the outer surfaces of the prevention portions 13, an inflow characteristic of the detection target can be improved. In addition, for example, since a unified impression can be provided to the entirety of the detector 100, the design of the detector 100 can be improved.

In addition, since at least one prevention portion 13 is provided for a plurality of the opening portions 122, for example, a contact object can be reliably prevented from entering the thermistor 14 side, so that the contact object can be reliably prevented from coming into contact with the thermistor 14. In addition, for example, electrostatic breakdown caused by the approach of a user's finger to the thermistor 14 can be prevented.

### [Modification examples of embodiment]

The embodiment according to the invention have been described above, but the specific configurations, unit, and portions of the invention can be modified and improved in any manner within the scope of the technical concept of each invention in the appended claims. Hereinafter, such modification examples will be described.

### (Regarding technical problem and effects of invention)

First, the technical problems and the effects of the invention are not limited to the above-described contents, and may differ depending on details of an implementation environment or configuration of the invention, and only some of the above-described problems may be solved, or only some of the above-described effects may be obtained.

### (Regarding segregation and integration)

In addition, the above-described configurations are functionally conceptual, and do not necessarily need to be physically configured as shown in the drawings. Namely, the specific modes of the segregation and integration of the portions are not limited to those shown in the drawings, and all or some thereof can be configured to be functionally or physically segregated or integrated in any unit.

### (Regarding prevention portion)

In addition, a configuration of the prevention portions 13 of FIG. 2 may be changed in any manner. For example, two prevention portions 13 may be provided for each of the opening portions 122, or the prevention portion 13 may be provided for only some opening portions 122 of the six opening portions 122. In addition, for example, the position where the prevention portion is provided in the opening portion 122 may be changed in any manner, and as one example, the prevention portion 13 may be provided on the circular member 121A or on the support member 121B in FIG. 5.

### (Regarding features)

In addition, the configurations of the embodiment and the features of the modification examples may be combined in any manner.

### Reference Signs List

11: outer cover
12: protective portion
13: prevention portion
14: thermistor
15: light emitter
100: detector
101: attachment portion
111: light guide portion
121: frame portion
121A: circular member
121B: support member
122: opening portion
123: spectroscopic portion
131: outer surface
900: attachment object

## Claims

1. A disaster prevention apparatus comprising:
an outer cover (11);
a detection element that detects a physical quantity of a detection target and that is provided at a center of the outer cover (11) in a direction parallel to an attachment surface of an attachment object (900) to which the disaster prevention apparatus is to be attached, and
a detection element protector that accommodates the detection element, that is provided on the outer cover (11), and that has an opening portion (122) through which the detection target flows in and out with respect to the detection element, the detection element protector including a circular member (121A), and support members (121B) located between the circular member (121A) and the outer cover (11) and supporting the circular member (121A), wherein the opening portion (122) is partitioned off by the support members (121B),
wherein the disaster prevention apparatus further comprises a preventor that allows inflow of the detection target to a detection element side through the opening portion (122) and prevents a contact object from entering and coming into contact with the detection element through the opening portion (122), and that is provided in the opening portion (122),
wherein the preventor is a projection that protrudes from the outer cover (11),
wherein outer surfaces (131) of the preventor are curved so that a height of the outer surface of the preventor increases from an outer side toward an inner side of the disaster prevention apparatus in the direction parallel to the attachment surface of the attachment object (900).

2. The disaster prevention apparatus according to claim 1,
wherein the preventor is provided at a position close to a center of an edge portion of the opening portion (122).

3. The disaster prevention apparatus according to claim 1 or 2,
wherein a plurality of opening portions is provided, and
at least the one preventor is provided for each opening portion (122) of the plurality of opening portions.

4. The disaster prevention apparatus according to any one of claims 1 to 3,
wherein the disaster prevention apparatus is at least a heat detector.

## Patentansprüche

1. Katastrophenschutzeinrichtung, umfassend:
eine äußere Abdeckung (11);
ein Detektionselement, das eine physikalische Menge eines Detektionsziels erkennt und das an einer Mitte der äußeren Abdeckung (11) in einer Richtung parallel zu einer Befestigungsfläche eines Befestigungsobjekts (900), an dem die Katastrophenschutzeinrichtung befestigt werden soll, bereitgestellt ist, und
einen Detektionselementschutz, der das Detektionselement aufnimmt, das auf der äußeren Abdeckung (11) bereitgestellt ist und einen Öffnungsabschnitt (122) aufweist, durch den das Detektionsziel in Bezug auf das Detektionselement ein- und ausströmt, wobei der Detektionselementschutz ein kreisförmiges Element (121A) und Stützelemente (121B) einschließt, die zwischen dem kreisförmigen Element (121 A) und der äußeren Abdeckung (11) gelegen sind und das kreisförmige Element (121A) stützen, wobei der Öffnungsabschnitt (122) durch die Stützelemente (121B) unterteilt ist,
wobei die Katastrophenschutzeinrichtung weiter einen Schutzmechanismus umfasst, der einen Zufluss des Detektionsziels zu einer Detektionselementseite durch den Öffnungsabschnitt (122) zulässt und verhindert, dass ein Kontaktobjekt durch den Öffnungsabschnitt (122) eintritt und mit dem Detektionselement in Kontakt kommt, und der in dem Öffnungsabschnitt (122) bereitgestellt ist,
wobei der Schutzmechanismus ein Vorsprung ist, der aus der äußeren Abdeckung (11) vorsteht,
wobei die Außenflächen (131) des Schutzmechanismus so gekrümmt sind, dass eine Höhe der Außenfläche des Schutzmechanismus von einer Außenseite zu einer Innenseite der Katastrophenschutzeinrichtung in der Richtung parallel zur Befestigungsfläche des Befestigungsobjekts (900) zunimmt.

2. Katastrophenschutzeinrichtung nach Anspruch 1,
wobei der Schutzmechanismus an einer Position nahe einer Mitte eines Randabschnitts des Öffnungsabschnitts (122) bereitgestellt ist.

3. Katastrophenschutzeinrichtung nach Anspruch 1 oder 2,
wobei eine Vielzahl von Öffnungsabschnitten bereitgestellt ist,
wobei für jeden Öffnungsabschnitt (122) der Vielzahl von Öffnungsabschnitten mindestens ein Schutzmechanismus bereitgestellt ist.

4. Katastrophenschutzeinrichtung nach einem der Ansprüche 1 bis 3,
wobei die Katastrophenschutzeinrichtung mindestens ein Wärmedetektor ist.

## Revendications

1. Appareil de prévention de catastrophe comprenant :
un couvercle externe (11) ;
un élément de détection qui détecte une quantité physique d'une cible de détection et qui est disposé au centre du couvercle externe (11) dans une direction parallèle à une surface de fixation d'un objet de fixation (900) auquel l'appareil de prévention de catastrophe est à fixer, et
un protecteur d'élément de détection qui loge l'élément de détection, qui est disposé sur le couvercle externe (11), et qui présente une partie d'ouverture (122) qui permet un écoulement entrant et sortant de la cible de détection par rapport à l'élément de détection, le protecteur d'élément de détection incluant un organe circulaire (121A), et des organes de support (121B) situés entre l'organe circulaire (121A) et le couvercle externe (11) et supportant l'organe circulaire (121A), dans lequel la partie d'ouverture (122) est cloisonnée par les organes de support (121B),
dans lequel l'appareil de prévention de catastrophe comprend en outre une partie de prévention qui permet un écoulement entrant de la cible de détection vers un côté élément de détection à travers la partie d'ouverture (122) et empêche un objet de contact de pénétrer et d'entrer en contact avec l'élément de détection à travers la partie d'ouverture (122), et qui est ménagé dans la partie d'ouverture (122),
dans lequel la partie de prévention est une saillie qui fait saillie à partir du couvercle externe (11),
dans lequel des surfaces extérieures (131) de la partie de prévention sont incurvées de sorte que la hauteur de la surface extérieure de la partie de prévention augmente d'un côté extérieur vers un côté intérieur de l'appareil de prévention de catastrophe dans la direction parallèle à la surface de fixation de l'objet de fixation (900).

2. Appareil de prévention de catastrophe selon la revendication 1,
dans lequel la partie de prévention est disposée en une position proche d'un centre d'une partie de bord de la partie d'ouverture (122).

3. Appareil de prévention de catastrophe selon la revendication 1 ou 2,
dans lequel une pluralité d'ouvertures sont ménagées, et
au moins la partie de prévention est fournie pour chaque partie d'ouverture (122) de la pluralité de parties d'ouverture.

4. Appareil de prévention de catastrophe selon l'une quelconque des revendications 1 à 3,
dans lequel l'appareil de prévention de catastrophe est au moins un détecteur de chaleur.
